# EUROPEAN PATENT APPLICATION

(11) **EP 4 783 726 A1**
(43) Date of publication of application: **29.07.2026**
(21) Application number: 26150555.6
(22) Date of filing: 07.01.2026
(51) Int. Cl.: H04W 76/19, H04W 48/12, H04W 48/20, H04W 52/02

(54) **METHODS FOR HANDLING A RE-ESTABLISHMENT PROCEDURE**

(30) Priority: 22.01.2025 US 202563747898 P; 05.01.2026 US 202619440584
(71) Applicant: Acer Incorporated, New Taipei City 221 (TW)
(72) Inventor: Lin, Jung-Mao, 221 New Taipei City (TW)
(74) Representative: Straus, Alexander

(57) **Abstract**

A method for a communication device for handling a re-establishment procedure includes initiating the re-establishment procedure (302); selecting a target cell according to a cell selection procedure (304); triggering an on-demand system information block 1, OD-SIB1, procedure according to a stored wake up signal, WUS, configuration to the target cell in response to at least one triggering OD-SIB1 procedure condition being fulfilled (306); selecting an OD-SIB1 request from a preamble pool (308); transmitting the OD-SIB1 request to the target cell at a uplink, UL, resource in the OD-SIB1 procedure (310); determining whether the target cell is a cell that the communication device is able to camp on according to an SIB1 from the target cell (312); and transmitting a re-establishment request message to the target cell in response to the target cell being the cell that the communication device is able to camp on (314).

## Description

### Field of the Invention

The present invention relates to methods and communication devices used in a wireless communication system, and more particularly, to methods and communication devices for handling a re-establishment procedure.

### Background of the Invention

A long-term evolution (LTE) system supporting the 3rd Generation Partnership Project (3GPP) Rel-8 standard and/or the 3GPP Rel-9 standard is developed by the 3GPP as a successor of the universal mobile telecommunication system (UMTS) for further enhancing performance of the UMTS to satisfy increasing needs of users.

An LTE-advanced (LTE-A) system, as its name implies, is an evolution of the LTE system. The LTE-A system targets faster switching between power states, improves performance at the coverage edge of an evolved Node-B (eNB), increases peak data rate and throughput, and includes advanced techniques, such as carrier aggregation (CA), uplink (UL) multiple-input multiple-output (UL-MIMO), etc.

A next generation radio access network (NG-RAN) supporting the 3GPP Rel-15 standard - the 3GPP Rel-19 standard is developed for further enhancing the LTE-A system. The NG-RAN includes one or more next generation Node-Bs (gNBs), and has properties of wider operation bands, different numerologies for different frequency ranges, massive MIMO, advanced channel codings, etc.

A communication device requires a system information block 1 (SIB1) provided by a cell to check whether the cell is a suitable cell for the communication device to perform a re-establishment procedure. In the absence of the SIB1, the communication equipment performs the OD-SIB1 procedure according to a wake up signal (WUS) configuration to request the SIB 1 from the cell. However, the communication device may not successfully re-establish the connection to the cell, e.g., due to an invalid WUS configuration and/or a delay caused by the performance of the OD-SIB1 procedure. Thus, how to handle the re-establishment procedure is an important problem to be solved.

### Summary of the Invention

This in mind, the present invention aims at providing methods and communication devices for handling a re-establishment procedure to solve the abovementioned problem.

This is achieved by methods and communication devices for handling a re-establishment procedure according to the independent claims, respectively. The dependent claims pertain to corresponding further developments and improvements.

As will be seen more clearly from the detailed description following below, a claimed method for a communication device for handling a re-establishment procedure comprises: initiating the re-establishment procedure; selecting a target cell according to a cell selection procedure; triggering an on-demand system information block 1 (OD-SIB1) procedure according to a stored wake up signal (WUS) configuration to the target cell in response to at least one triggering OD-SIB1 procedure condition being fulfilled; selecting an OD-SIB1 request from a preamble pool; transmitting the OD-SIB1 request to the target cell at a uplink (UL) resource in the OD-SIB1 procedure; determining whether the target cell is a cell that the communication device is able to camp on according to an SIB1 from the target cell; and transmitting a re-establishment request message to the target cell in response to the target cell being the cell that the communication device is able to camp on.

A claimed method of a serving cell for handling a re-establishment procedure comprises: transmitting a wake up signal (WUS) configuration set to a communication device; wherein the WUS configuration set comprises a plurality of identities (IDs) for a plurality of cells, a plurality of frequencies corresponding to the plurality of cells and a plurality of WUS configuration corresponding to the plurality of cells; wherein the plurality of cells comprises the serving cell.

A claimed method of a network energy saving (NES) cell for handling a re-establishment procedure comprises: performing an on-demand system information block 1 (OD-SIB1) procedure with a communication device according to a stored wake up signal (WUS) configuration in response to at least one triggering OD-SIB1 procedure condition being fulfilled; and receiving a re-establishment request message from the communication device in response to the NES cell being a cell that the communication device is able to camp on; wherein the step of performing the OD-SIB1 procedure comprises: receiving an OD-SIB1 request from the communication device at a uplink (UL) resource.

### Brief Description of the Drawings

In the following, the invention is further illustrated by way of example, taking reference to the following drawings.
FIG. 1 is a schematic diagram of a wireless communication system according to an example of the present invention.
FIG. 2 is a schematic diagram of a communication device according to an example of the present invention.
FIG. 3 is a flowchart of a process according to an example of the present invention.
FIG. 4 is a flowchart of a process according to an example of the present invention.
FIG. 5 is a flowchart of a process according to an example of the present invention.
FIG. 6 is a sequence diagram of a process according to an example of the present invention.
FIG. 7 is a sequence diagram of a process according to an example of the present invention.
FIG. 8 is a sequence diagram of a process according to an example of the present invention.
FIG. 9 is a flowchart of a process according to an example of the present invention.
FIG. 10 is a flowchart of a process according to an example of the present invention.
FIG. 11 is a sequence diagram of a process according to an example of the present invention.
FIG. 12 is a schematic diagram of a specific period for verifying whether a stored WUS configuration is valid according to an example of the present invention.
FIG. 13 is a schematic diagram of a specific period for verifying whether a stored WUS configuration is valid according to an example of the present invention.

### Detailed Description

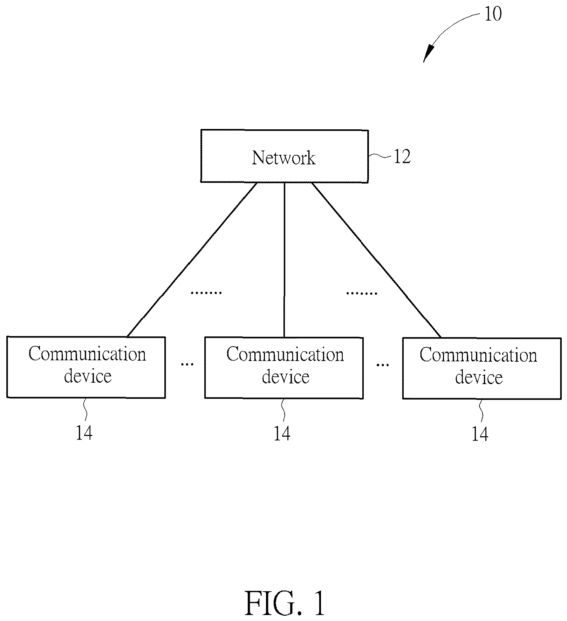

FIG. 1 is a schematic diagram of a wireless communication system 10 according to an example of the present invention. The wireless communication system 10 is briefly composed of a network 12 and a plurality of communication devices 14. The wireless communication system 10 may support a time-division duplexing (TDD) mode, a frequency-division duplexing (FDD) mode, a TDD-FDD joint operation mode, a non-terrestrial network (NTN) mode or a licensed-assisted access (LAA) mode. That is, the network 12 and a communication device 14 may communicate with each other via FDD carrier(s), TDD carrier(s), licensed carrier(s) (licensed serving cell(s)) and/or unlicensed carrier(s) (unlicensed serving cell(s)). In addition, the wireless communication system 10 may support a carrier aggregation (CA). That is, the network 12 and a communication device 14 may communicate with each other via multiple serving cells (e.g., multiple serving carriers) including a primary cell (e.g., primary component carrier) and one or more secondary cells (e.g., secondary component carriers).

In FIG. 1, the network 12 and the communication devices 14 are simply utilized for illustrating the structure of the wireless communication system 10. Practically, the network 12 may be a universal terrestrial radio access network (UTRAN) including at least one Node-B (NB) in a universal mobile telecommunications system (UMTS). In one example, the network 12 may be an evolved UTRAN (E-UTRAN) including at least one evolved NB (eNB) and/or at least one relay node in a long term evolution (LTE) system, an LTE-Advanced (LTE-A) system, an evolution of the LTE-A system, etc. In one example, the network 12 may be a next generation radio access network (NG-RAN) including at least one next generation Node-B (gNB) and/or at least one fifth generation (5G) base station (BS). In one example, the gNB or the 5G BS of network 12 may include a NTN Gateway and a NTN payload. In one example, the gNB or the 5G BS of network 12 may be a transmission reception point (TRP). In one example, the network 12 may be any BS conforming to a specific communication standard to communicate with a communication device 14.

A new radio (NR) is a standard defined for a 5G system (or 5G network) to provide a unified air interface with better performance. gNBs are deployed to realize the 5G system, which supports advanced features such as enhanced Mobile Broadband (eMBB), Ultra Reliable Low Latency Communications (URLLC), massive Machine Type Communications (mMTC), etc. The eMBB provides broadband services with a greater bandwidth and a low/moderate latency. The URLLC provides applications (e.g., end-to-end communication) with properties of a higher reliability and a low latency. The examples of the applications include an industrial internet, smart grids, infrastructure protection, remote surgery and an intelligent transportation system (ITS). The mMTC is able to support internet-of-things (IoT) of the 5G system which include billions of connected devices and/or sensors.

Furthermore, the network 12 may also include at least one of the UTRAN/E-UTRAN/NG-RAN and a core network, wherein the core network may include network entities such as Mobility Management Entity (MME), Serving Gateway (S-GW), Packet Data Network (PDN) Gateway (P-GW), Self-Organizing Networks (SON) server and/or Radio Network Controller (RNC), Access and Mobility Management Function (AMF), Session Management Function (SMF), User Plane Function (UPF), Authentication Server Function (AUSF), etc. In one example, after the network 12 receives information transmitted by a communication device 14, the information may be processed only by the UTRAN/E-UTRAN/NG-RAN and decisions corresponding to the information are made at the UTRAN/E-UTRAN/NG-RAN. In one example, the UTRAN/E-UTRAN/NG-RAN may forward the information to the core network, and the decisions corresponding to the information are made at the core network after the core network processes the information. In one example, the information may be processed by both the UTRAN/E-UTRAN/NG-RAN and the core network, and the decisions are made after coordination and/or cooperation are performed by the UTRAN/E-UTRAN/NG-RAN and the core network.

A communication device 14 may be a user equipment (UE), a Very Small Aperture Terminal (VSAT), a low cost device (e.g., machine type communication (MTC) device), a device-to-device (D2D) communication device, a narrow-band internet of things (IoT) (NB-IoT), a mobile phone, a laptop, a tablet computer, an electronic book, a portable computer system, or combination thereof. In addition, the network 12 and the communication device 14 can be seen as a transmitter or a receiver according to direction (i.e., transmission direction), e.g., for an uplink (UL), the communication device 14 is the transmitter and the network 12 is the receiver, and for a downlink (DL), the network 12 is the transmitter and the communication device 14 is the receiver.

A communication device 14 may perform a layer 1 (L1) measurement to generate an L1 measurement result, and may change a serving cell according to the L1 measurement result. This procedure may be called as a conditional L1/L2 triggered mobility (C-LTM). The C-LTM may support an intra-gNB-distributed unit (intra-gNB-DU) mobility, an intra-gNB-central unit (intra-gNB-CU) mobility and/or an inter-gNB-DU mobility. The C-LTM may support an intra-frequency mobility and/or an inter-frequency mobility. The C-LTM may be supported for a licensed spectrum. The C-LTM may support at least one of following scenarios: a primary cell (PCell) change in a non-CA scenario or/and a non-dual connection (non-DC) scenario; a PCell and secondary cell (SCell) change in a CA scenario; a DC scenario. The communication device 14 may execute an L3 handover command transmitted by the network 12.

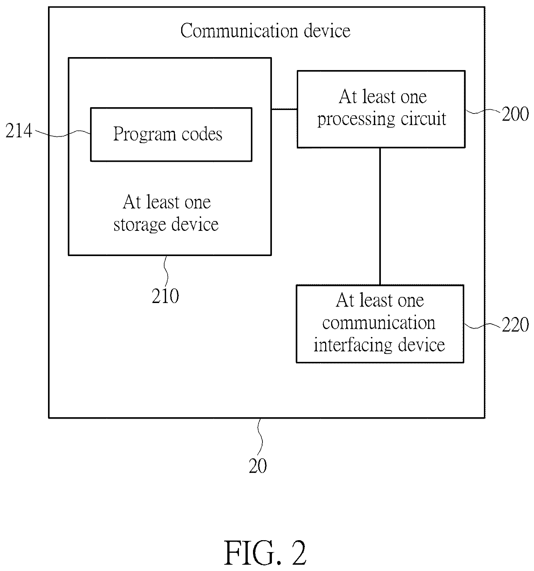

FIG. 2 is a schematic diagram of a communication device 20 according to an example of the present invention. The communication device 20 may be a communication device 14 or the network 12 shown in FIG. 1, but is not limited herein. The communication device 20 may include at least one processing circuit 200 such as a microprocessor or Application Specific Integrated Circuit (ASIC), at least one storage device 210 and at least one communication interfacing device 220. The at least one storage device 210 may be any data storage device that may store program codes 214, accessed and executed by the at least one processing circuit 200. Examples of the at least one storage device 210 include, but are not limited to, a subscriber identity module (SIM), read-only memory (ROM), flash memory, random-access memory (RAM), Compact Disc Read-Only Memory (CD-ROM), digital versatile disc-ROM (DVD-ROM), Blu-ray Disc-ROM (BD-ROM), magnetic tape, hard disk, optical data storage device, non-volatile storage device, non-transitory computer-readable medium (e.g., tangible media), etc. The at least one communication interfacing device 220 is preferably at least one transceiver and is used to transmit and receive signals (e.g., data, messages and/or packets) according to processing results of the at least one processing circuit 200.

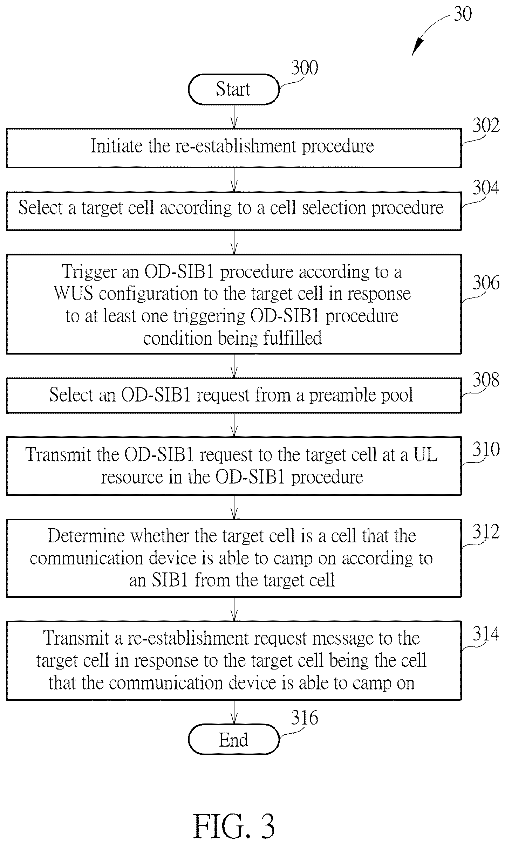

FIG. 3 is a flowchart of a process 30 according to an example of the present invention. The process 30 may be utilized in a communication device (e.g., a communication device 14 in FIG. 1 or the communication device 20 in FIG. 2), to handle a re-establishment procedure. The process 30 may be compiled into the program codes 214 and includes the following steps:

| | |
|---|---|
| Step 300: | Start. |
| Step 302: | Initiate the re-establishment procedure. |
| Step 304: | Select a target cell according to a cell selection procedure. |
| Step 306: | Trigger an on-demand system information block 1 (OD-SIB1) procedure according to a stored wake up signal (WUS) configuration to the target cell in response to at least one triggering OD-SIB1 procedure condition being fulfilled. |
| Step 308: | Select an OD-SIB1 request from a preamble pool. |
| Step 310: | Transmit the OD-SIB1 request to the target cell at a UL resource in the OD-SIB1 procedure. |
| Step 312: | Determine whether the target cell is a cell that the communication device is able to camp on according to an SIB1 from the target cell. |
| Step 314: | Transmit a re-establishment request message to the target cell in response to the target cell being the cell that the communication device is able to camp on. |
| Step 316: | End. |

According to the process 30, the communication device initiates the re-establishment procedure. Then, the communication device selects a target cell according to a cell selection procedure. The communication device triggers (and performs) an OD-SIB1 procedure according to a stored WUS configuration to the target cell in response to at least one triggering OD-SIB1 procedure condition (e.g., all triggering OD-SIB1 procedure conditions) being fulfilled. The communication device selects an OD-SIB1 request (e.g., a preamble) from a preamble pool, and transmits the OD-SIB1 request to the target cell at a UL resource in the OD-SIB1 procedure. The communication device determines whether the target cell is a cell that the communication device is able to camp on according to an SIB1 from the target cell. The communication device transmits a re-establishment request message (e.g., Msg3) to the target cell in response to the target cell being the cell that the communication device is able to camp on.

Realization of the process 30 is not limited to the above description. The following examples may be applied to realize the process 30.

In one example, the cell that the communication device is able to camp on is a highest-ranking cell based on a measurement. In one example, the stored WUS configuration is comprised in a WUS configuration set. In one example, the WUS configuration set is received from a serving cell of the communication device and stored by the communication device.

In one example, the at least one triggering OD-SIB1 procedure condition comprises at least one of the following conditions: the target cell does not provide the SIB1 (e.g., periodically); the target cell is a network energy saving (NES) cell; and the stored WUS configuration is valid. In one example, the SIB1 comprises at least one of the following information: public land mobile network (PLMN) information; availability and scheduling of other SIBs; and access control information. In one example, the PLMN information is used for determining whether the target cell is the cell that the communication device is able to camp on. In one example, the NES cell provides an OD-SIB1 on demand (i.e., does not provide the OD-SIB1 periodically). In one example, the at least one triggering OD-SIB1 procedure condition comprises the following condition: the target cell supports the OD-SIB1 procedure.

In one example, the communication device verifies whether the stored WUS configuration is valid. In one example, the step of verifying whether the stored WUS configuration is valid comprises at least one of the following steps: determining the stored WUS configuration is valid in response to a system frame number (SFN) of a current radio frame being in a specific period (e.g., WUS_ValidPeriod); and determining the stored WUS configuration is invalid at an end of the specific period. In one example, the step of verifying whether the stored WUS configuration is valid comprises: determining the stored WUS configuration is invalid in response to the SFN of the current radio frame being out of the specific period. In one example, the step of verifying whether the stored WUS configuration is valid comprises: determining the stored WUS configuration is invalid in response to initiating the re-establishment procedure.

In one example, the communication device determines the end of the specific period. In one example, the step of determining the end of the specific period comprises: receiving, from the serving cell, a system information (SI) change indication being set in a modification period; and ending the specific period at a boundary of the modification period. That is, the communication device determines the end of the specific period by whether receiving the SI change indication in the modification period. In one example, the SI change indication is broadcasted (e.g., via a short message). In one example, the boundary of the modification period is an end of the modification period. In one example, the boundary of the modification period is defined by at least one SFN value. In one example, the SFN value is divisible by a number of radio frames (RFs) comprising the modification period. In one example, the number of RFs is a product of a modification period coefficient and a default paging cycle. In one example, the modification period coefficient is 2, 4, 8 or 16, but not be limited herein. In one example, the communication device ends the specific period at a boundary of a next modification period in response to the SI change indication not being set. In one example, the boundary of the next modification period is an end of the next modification period. In one example, the communication device ends the specific period at the boundary of the modification period in response to the SI change indication being set.

In one example, the communication device checks whether the SI change indication is set or not, to determine a range of the specific period. In one example, the communication device monitors the SI change indication when a third timer (e.g., T310) is running, if a radio link failure (RLF) condition occurs. In one example, the communication device monitors the SI change indication at a beginning of each modification period.

In one example, the UL resource is a random access (RA) resource. In one example, the OD-SIB1 request is used for informing the target cell that the OD-SIB1 procedure is triggered. In one example, the communication device is configured with the preamble pool by the serving cell. In one example, the communication device randomly selects a preamble as the OD-SIB1 request from the preamble pool. In one example, the communication device is configured with a random access occasion (RO) set by the serving cell. In one example, the communication device (e.g., randomly) selects an RO from the RO set to transmit the OD-SIB1 request to the target cell.

In one example, the OD-SIB1 procedure comprises at least one of the following steps: starting a monitoring window; monitoring (e.g., receiving) an OD-SIB1 request acknowledgement (ACK) (e.g., a random access response (RAR) or a Medium Access Control (MAC) control element (CE)) in the monitoring window; and stopping the monitoring window in response to receiving the OD-SIB1 request ACK from the target cell. That is, the communication device performs the OD-SIB1 procedure to request the target cell to provide the OD-SIB1.

In one example, the step of monitoring the OD-SIB1 request ACK in the monitoring window comprises: determining (e.g., releasing) the stored WUS configuration in response to the monitoring window expiring. In one example, the step of monitoring the OD-SIB1 request ACK in the monitoring window comprises at least one of the following steps: retransmitting the OD-SIB1 request to the target cell in response to the monitoring window expiring; increasing a value of a counter by 1 in response to retransmitting the OD-SIB1 request to the target cell; and determining the target cell is a barring cell (e.g., a cell that the communication device is not able to camp on) in response to the value of the counter being greater than a threshold (e.g., ReEst-preambleTransMax). That is, the communication device retransmits the OD-SIB1 request to the target cell, if the communication device does not receive the OD-SIB1 request ACK from the target cell. In one example, the communication device determines (e.g., declares) a failure of the OD-SIB1 procedure in response to the value of the counter being greater than the threshold. In one example, the threshold may be 0, 1, 2, 3, 4, 5, 6, 7, 8, 10, 20, 50, 100 or 200, but not limited herein. In one example, the value of the counter represents a retry number for the communication device to perform the OD-SIB1 procedure.

In one example, the step of monitoring the OD-SIB1 request ACK in the monitoring window comprises at least one of the following steps: determining (e.g., declaring) the failure of the OD-SIB1 procedure in response to the communication device not receiving the OD-SIB1 request ACK in the monitoring window; retransmitting the OD-SIB1 request to the target cell in response to determining (e.g., declaring) the failure of the OD-SIB1 procedure; increasing the value of the counter by 1 in response to retransmitting the OD-SIB1 request to the target cell; and determining the target cell is a barring cell (e.g., a cell that the communication device is not able to camp on) in response to the value of the counter being greater than the threshold (e.g., ReEst-preambleTransMax).

In one example, the OD-SIB1 request ACK is used for informing the communication device that the OD-SIB1 request is received by the target cell. In one example, the OD-SIB1 request ACK comprises at least one of the following data: a timing advance (TA) value; a resource for the re-establishment request message; an identity of the communication device; and information for the SIB1. In one example, the OD-SIB1 procedure further comprises the following step: monitoring the SIB1 in response to monitoring the OD-SIB1 request ACK. In one example, the TA value is used for a UL synchronization. In one example, the identity of the communication device comprises a random access preamble identity (RAPID) or a UE temperate ID.

In one example, the OD-SIB1 request ACK comprises the OD-SIB1. That is, the target cell does not need to additionally transmit the OD-SIB1 to the communication device in order to shorten a delay caused by the performance of the OD-SIB1 procedure. In one example, the OD-SIB1 in the OD-SIB1 request ACK is a completed OD-SIB1. In one example, the completed OD-SIB1 comprises information (e.g., the PLMN information) of the target cell, and comprises at least one of SIB availability information, SIB scheduling information and access control information. The information of the target cell is used for the communication device to determine whether the target cell is the cell that the communication device is able to camp on. In one example, the OD-SIB1 in the OD-SIB1 request ACK is a simplified OD-SIB1. In one example, the simplified OD-SIB1 (e.g., only) comprises the information of the target cell. In one example, the communication device determines whether the target cell is the cell that the communication device is able to camp on according to the OD-SIB1 in the OD-SIB1 request ACK. In one example, the communication device determines the target cell is a barring cell and reselects another target cell according to the cell selection procedure, in response to the target cell not being the cell that the communication device is able to camp on.

In one example, the OD-SIB1 is broadcasted by the target cell in order to reduce a signal overhead. In one example, the OD-SIB1 procedure comprises at least one of the following steps: starting an OD-SIB1 monitoring window; monitoring (e.g., receiving) an OD-SIB1 in the OD-SIB1 monitoring window; and stopping the OD-SIB1 monitoring window in response to receiving the OD-SIB1 from the target cell. In one example, the OD-SIB1 procedure comprises at least one of the following steps: retransmitting the OD-SIB1 request to the target cell in response to the communication device not receiving the OD-SIB1 in the OD-SIB1 monitoring window; determining the target cell is the barring cell in response to an retry number for the communication device to retransmitting the OD-SIB1 request exceeding an OD-SIB1 request threshold; and reselecting another target cell in response to the retry number exceeding the OD-SIB1 request threshold. In one example, the OD-SIB1 request threshold indicates a maximum of retry number for the communication device to retransmitting the OD-SIB1 request.

In one example, a UL resource for transmitting the re-establishment request message is assigned by the OD-SIB1 request ACK. In one example, the UL resource assigned by the OD-SIB1 request ACK is after a DL resource for receiving the OD-SIB1.

In one example, the communication device determines (e.g., declares) a collision of the re-establishment request message occurs in response to the communication device and at least one other communication device receiving the same D-SIB1 request ACK.

In one example, the communication device starts a fourth timer in response to transmitting the re-establishment request message to the target cell. In one example, the communication device determines (e.g., declares) the collision of the re-establishment request message occurs in response to the fourth timer expiring.

In one example, the communication device determines (e.g., declares) the collision of the re-establishment request message occurs in response to a resolution ID in the re-establishment message not being the same as a resolution ID in the re-establishment request message. In one example, the resolution ID in the re-establishment request message is the identity of the communication device. In one example, the resolution ID in the re-establishment request message is a sequence number (e.g., randomly) selected by the communication device.

In one example, the communication device retransmits the re-establishment request message to the target cell in response to determining (e.g., declaring) the collision of the re-establishment request message occurs.

In one example, the communication device starts a first timer (e.g., T310) in response to finding a radio link problem. In one example, the communication device stops the first timer in response to solving the radio link problem. In one example, the communication device declares an RLF in response to the first timer expiring. In one example, the communication device initiates the re-establishment procedure in response to declaring the RLF.

In one example, the communication device enters an idle mode from a connected mode in response to a failure of the re-establishment procedure. In one example, the communication device recovers a connection (e.g., from the serving cell to the target cell) in response to the re-establishment procedure being successful.

In one example, the communication device starts a second timer (e.g., T311) in response to initiating the re-establishment procedure. In one example, the communication device stops the second timer in response to the re-establishment procedure being done (e.g., the communication device camping on the target cell successfully). In one example, the communication device determines (e.g., declares) the failure of the re-establishment procedure in response to the second timer expiring.

In one example, the communication device receives a re-establishment message (e.g., Msg4) from the target cell, after transmitting the re-establishment request message to the target cell. In one example, the communication device camps on the target cell (e.g., reestablishes a connection to the target cell) according to the re-establishment message. In one example, the communication device receives a setup message (e.g., Msg4) from the target cell, after transmitting the re-establishment request message to the target cell. In one example, the communication device camps on the target cell (e.g., setups a connection to the target cell) according to the setup message.

In one example, the communication device receives the WUS configuration set from the serving cell. In one example, the WUS configuration set is received via an SIB. In one example, the communication device stores the WUS configuration set, after receiving the WUS configuration set. In one example, the WUS configuration set comprises a plurality of identities (IDs) for a plurality of cells, a plurality of frequencies (e.g., respectively) corresponding to the plurality of cells and a plurality of WUS configuration (e.g., respectively) corresponding to the plurality of cells.

In one example, the WUS configuration set further comprises a plurality of indications (e.g., respectively) corresponding to the plurality of WUS configurations. In one example, each of the plurality of indications indicates whether a corresponding WUS configuration is supported by the communication device in the connected mode. In one example, the communication device receives a cell list from the serving cell. In one example, the cell list indicates which WUS configuration in the WUS configuration set is supported by the communication device in the connected mode.

In one example, the communication device determines the target cell is not the cell that the communication device is able to camp on in response to the target cell not supporting the OD-SIB1 procedure. In one example, the communication device adds a condition that "the target cell supports the OD-SIB1 procedure" into the at least one triggering OD-SIB1 procedure condition in response to the target cell not supporting the OD-SIB1 procedure.

In one example, the communication device transmits the OD-SIB1 request to the target cell once. In one example, the communication device determines the target cell is not the cell that the communication device is able to camp on in response to the communication device not receiving the OD-SIB1 request ACK in the monitoring window. In one example, the communication device determines the stored WUS configuration is invalid in response to the communication device not receiving the OD-SIB1 request ACK in the monitoring window. In one example, the communication device determines (e.g., releases) the stored WUS configuration in response to the communication device not receiving the OD-SIB1 request ACK in the monitoring window.

In one example, the communication device reselects another target cell according to the cell selection procedure in response to the stored WUS configuration being invalid.

In one example, the WUS configuration set further comprises a plurality of thresholds (e.g., ReEst-preambleTransMax) (e.g., respectively) corresponding to the plurality of WUS configurations. In one example, each of the plurality of thresholds indicates a maximum of retry number for the communication device in the connected mode to perform the OD-SIB1 procedure according to a corresponding WUS configuration. In one example, the communication device determines the target cell is the cell that the communication device is able to camp on in response to the retry number not exceeding a corresponding threshold of the plurality of thresholds. In one example, the communication device determines (e.g., releases) the WUS configuration set in response to the retry number exceeding the corresponding threshold of the plurality of thresholds.

In one example, the communication device determines (e.g., releases) the WUS configuration set in response to initiating the re-establishment procedure.

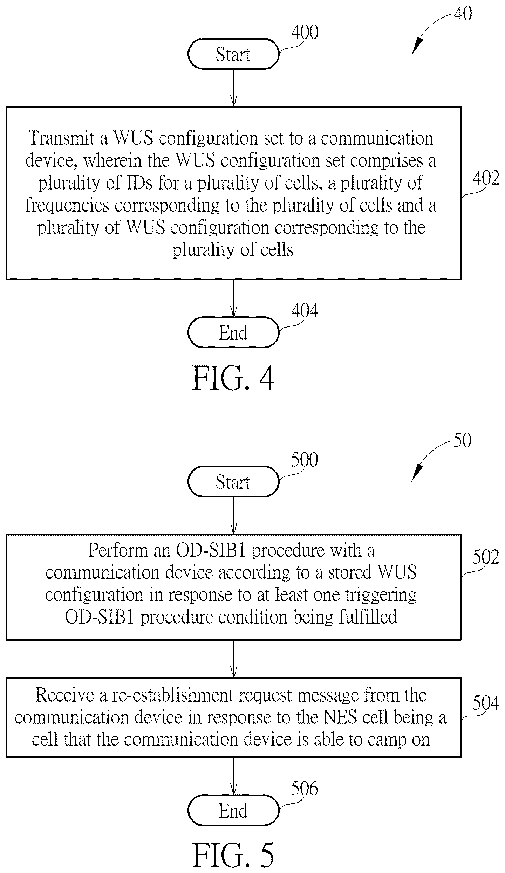

FIG. 4 is a flowchart of a process 40 according to an example of the present invention. The process 40 may be utilized in a serving cell (or a serving BS) (e.g., a cell of the network 12 in FIG. 1, the communication device 20 in FIG. 2, or the serving cell in the examples of the process 30), to handle a re-establishment procedure. The process 40 may be compiled into the program codes 214 and includes the following steps:

| | |
|---|---|
| Step 400: | Start. |
| Step 402: | Transmit a WUS configuration set to a communication device, wherein the WUS configuration set comprises a plurality of IDs for a plurality of cells, a plurality of frequencies corresponding to the plurality of cells and a plurality of WUS configuration corresponding to the plurality of cells. |
| Step 404: | End. |

According to the process 40, the serving cell transmits a WUS configuration set to a communication device (e.g., the communication device in the process 30). The WUS configuration set comprises a plurality of IDs for a plurality of cells, a plurality of frequencies (e.g., respectively) corresponding to the plurality of cells and a plurality of WUS configuration (e.g., respectively) corresponding to the plurality of cells.

Realization of the process 40 is not limited to the above description. The following examples may be applied to realize the process 40.

In one example, the plurality of cells comprises the serving cell. In one example, the plurality of cells comprises at least one neighbor cell of the serving cell.

In one example, the WUS configuration set is transmitted via an SIB. In one example, the WUS configuration set further comprises a plurality of indications (e.g., respectively) corresponding to the plurality of WUS configurations. In one example, each of the plurality of indications indicates whether a corresponding WUS configuration is supported by the communication device in a connected mode.

In one example, the serving cell transmits a cell list to the communication device. In one example, the cell list indicates which WUS configuration in the WUS configuration set is supported by the communication device in a connected mode.

In one example, the WUS configuration set further comprises a plurality of thresholds (e.g., respectively) corresponding to the plurality of WUS configurations. In one example, each of the plurality of thresholds indicates a maximum of retry number for the communication device in a connected mode to perform an OD-SIB1 procedure according to a corresponding WUS configuration.

The examples of the process 30 may be applied to the process 40, and are not narrated herein for brevity.

FIG. 5 is a flowchart of a process 50 according to an example of the present invention. The process 50 may be utilized in a NES cell (or a NES BS) (e.g., a NES cell of the network 12 in FIG. 1, the communication device 20 in FIG. 2, or the target cell in the process 30), to handle a re-establishment procedure. The process 50 may be compiled into the program codes 214 and includes the following steps:

| | |
|---|---|
| Step 500: | Start. |
| Step 502: | Perform an OD-SIB1 procedure with a communication device according to a stored WUS configuration in response to at least one triggering OD-SIB1 procedure condition being fulfilled. |
| Step 504: | Receive a re-establishment request message from the communication device in response to the NES cell being a cell that the communication device is able to camp on. |
| Step 506: | End. |

According to the process 50, the NES cell performs an OD-SIB1 procedure with a communication device (e.g., the communication device in the process 30) according to a stored WUS configuration in response to at least one triggering OD-SIB1 procedure condition (e.g., all triggering OD-SIB1 procedure conditions) being fulfilled. The Step 502 comprises: receiving an OD-SIB1 request from the communication device at a UL resource.

Realization of the process 50 is not limited to the above description. The following examples may be applied to realize the process 50.

In one example, the cell that the communication device is able to camp on is a highest-ranking cell based on a measurement. In one example, the stored WUS configuration is comprised in a WUS configuration set. In one example, the WUS configuration set is transmitted by the serving cell to the communication device, and stored by the communication device.

In one example, the at least one triggering OD-SIB1 procedure condition comprises at least one of the following conditions: the NES cell does not provide an SIB1 (e.g., periodically); and the stored WUS configuration is valid. In one example, the SIB1 comprises at least one of the following information: PLMN information; availability and scheduling of other SIBs; and access control information. In one example, the PLMN information is used for determining whether the NES cell is the cell that the communication device is able to camp on. In one example, the NES cell provides an OD-SIB1 on demand (i.e., does not provide the OD-SIB1 periodically). In one example, the at least one triggering OD-SIB1 procedure condition comprises the following condition: the NES cell supports the OD-SIB1 procedure.

In one example, the stored WUS configuration is valid (or is determined to be valid) in response to a SFN of a current radio frame being in a specific period (e.g., WUS_ValidPeriod). In one example, the stored WUS configuration is invalid (or is determined to be invalid) at an end of the specific period. In one example, the stored WUS configuration is invalid (or is determined to be invalid) in response to the SFN of the current radio frame being out of the specific period. In one example, the stored WUS configuration is invalid (or is determined to be valid) in response to the communication device initiating the re-establishment procedure.

In one example, the end of the specific period is at a boundary of a modification period in which the communication device receives an SI change indication being set from the serving cell of the communication device. That is, the specific period is ended at the boundary of the modification period in response to the received SI change indication being set. In one example, the end of the specific period is at a boundary of a next modification period in which the communication device receives an SI change indication being not set from the serving cell. That is, the specific period is ended at the boundary of the next modification period in response to the received SI change indication being not set.

In one example, the OD-SIB1 procedure comprises at least one of the following steps: receiving an OD-SIB1 request (e.g., a preamble) from the communication device; and transmitting an OD-SIB1 request ACK (e.g., an RAR) to the communication device in response to the OD-SIB1 request. In one example, the NES cell transmits a re-establishment message (e.g., Msg4) to the communication device in response to the re-establishment request message. In one example, the NES cell transmits a setup message (e.g., Msg4) to the communication device in response to the re-establishment request message. In one example, the NES cell broadcasts the OD-SIB1 in order to reduce a signal overhead.

In one example, the UL resource is a random access (RA) resource. In one example, the OD-SIB1 request is used for informing the NES cell that the OD-SIB1 procedure is triggered. In one example, the OD-SIB1 request ACK is used for informing the communication device that the OD-SIB1 request is received by the target cell. In one example, the OD-SIB1 request ACK comprises at least one of the following data: a timing advance (TA) value; a resource for the re-establishment request message; an identity of the communication device; and information for an SIB1. In one example, the TA value is used for a UL synchronization. In one example, the identity of the communication device comprises a random access preamble identity (RAPID) or a UE temperate ID.

In one example, the OD-SIB1 request ACK comprises the OD-SIB1. That is, the NES cell does not need to additionally transmit the OD-SIB1 to the communication device in order to shorten a delay caused by the performance of the OD-SIB1 procedure. In one example, the OD-SIB1 in the OD-SIB1 request ACK is a completed OD-SIB1. In one example, the completed OD-SIB1 comprises information (e.g., the PLMN information) of the target cell, and comprises at least one of SIB availability information, SIB scheduling information and access control information. The information of the target cell is used for the communication device to determine whether the target cell is the cell that the communication device is able to camp on. In one example, the OD-SIB1 in the OD-SIB1 request ACK is a simplified OD-SIB1. In one example, the simplified OD-SIB1 (e.g., only) comprises the information of the target cell.

In one example, a UL resource for receiving the re-establishment request message is assigned by the OD-SIB1 request ACK. In one example, the UL resource assigned by the OD-SIB1 request ACK is after a DL resource for transmitting (e.g., broadcasting) the OD-SIB1.

The examples of the processes 30-40 may be applied to the process 50, and are not narrated herein for brevity.

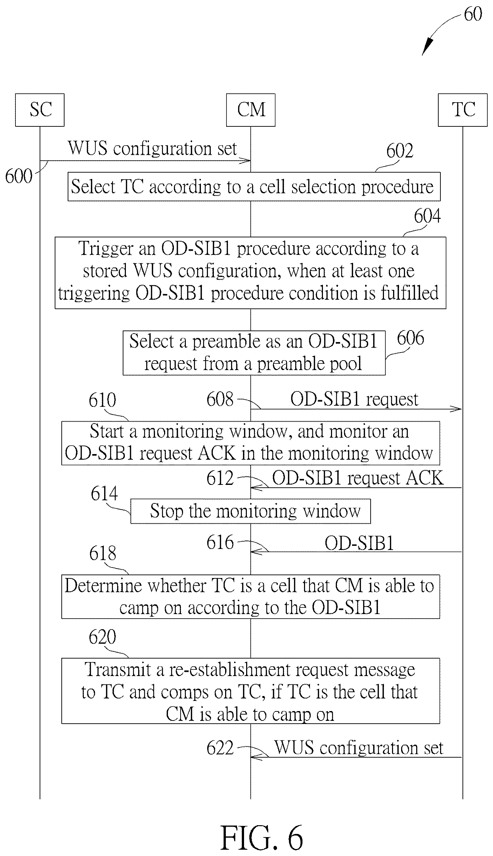

FIG. 6 is a sequence diagram of a process 60 according to an example of the present invention. There are a communication device CM, a serving cell SC of the communication device CM and a target cell TC of the communication device CM in FIG. 6. The communication device CM is in an idle mode or an inactive mode. In Step 600, the serving cell SC transmits a WUS configuration set of the serving cell SC to the communication device CM. In Step 602, the communication device CM selects the target cell TC according to a cell selection procedure. The target cell TC is a highest-ranking cell based on a measurement. In Step 604, the communication device CM triggers an OD-SIB1 procedure according to a stored WUS configuration, when at least one triggering OD-SIB1 procedure condition is fulfilled. The stored WUS configuration is comprised in the WUS configuration set, and corresponds to the target cell TC. The at least one triggering OD-SIB1 procedure condition comprises at least one of: the target cell TC does not provide an SIB1; the target cell TC is a NES cell; the stored WUS configuration is valid; and the target cell TC supports the OD-SIB1 procedure.

In Step 606, the communication device CM selects a preamble as an OD-SIB1 request from a preamble pool. In Step 608, the communication device CM transmits the OD-SIB1 request to the target cell TC. In Step 610, the communication device CM starts a monitoring window, and monitors an OD-SIB1 request ACK in the monitoring window. In Step 612, the target cell TC transmits the OD-SIB1 request ACK to the communication device CM. In Step 614, the communication device CM stops the monitoring window. In Step 616, the target cell TC transmits an OD-SIB1 to the communication device CM. In Step 618, the communication device CM determines whether the target cell TC is a cell that the communication device CM is able to camp on according to the OD-SIB1. In Step 620, the communication device CM transmits a re-establishment request message to the target cell TC and camps on the target cell TC, if the target cell TC is the cell that the communication device CM is able to camp on. In Step 622, the target cell TC transmits a WUS configuration set of the target cell TC the to the communication device CM, after the communication device CM camps on the target cell TC.

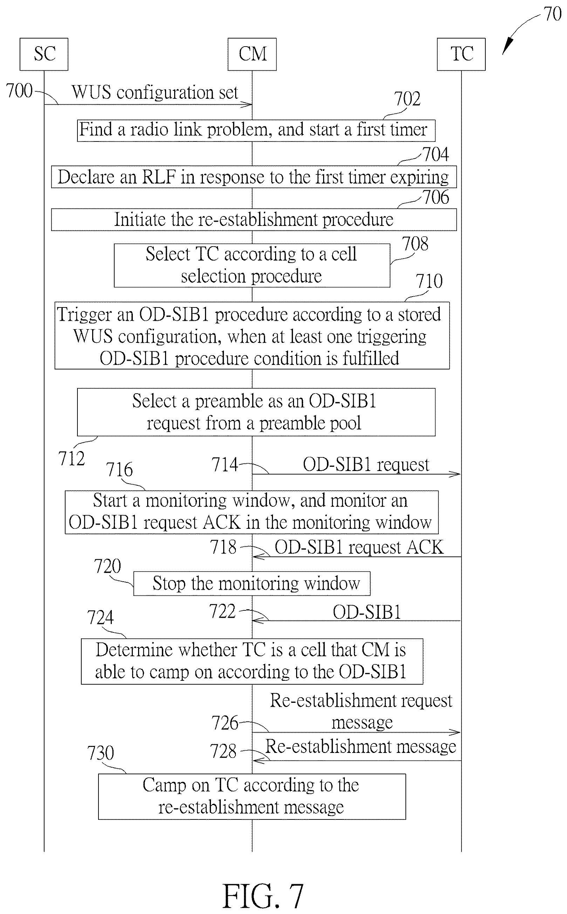

FIG. 7 is a sequence diagram of a process 70 according to an example of the present invention. There are a communication device CM, a serving cell SC of the communication device CM and a target cell TC of the communication device CM in FIG. 7. The communication device CM is in a connected mode. In Step 700, the serving cell SC transmits a WUS configuration set of the serving cell SC to the communication device CM. In Step 702, the communication device CM finds a radio link problem, and starts a first timer. In Step 704, the communication device CM declares an RLF in response to the first timer expiring. In Step 706, the communication device CM initiates the re-establishment procedure. In Step 708, the communication device CM selects the target cell TC according to a cell selection procedure. In Step 710, the communication device CM triggers an OD-SIB1 procedure according to a stored WUS configuration, when at least one triggering OD-SIB1 procedure condition is fulfilled. The stored WUS configuration is comprised in the WUS configuration set, and corresponds to the target cell TC. The at least one triggering OD-SIB1 procedure condition comprises at least one of: the target cell TC does not provide an SIB1; the target cell TC is a NES cell; the stored WUS configuration is valid; and the target cell TC supports the OD-SIB1 procedure.

In Step 712, the communication device CM selects a preamble as an OD-SIB1 request from a preamble pool. In Step 714, the communication device CM transmits an OD-SIB1 request to the target cell TC. In Step 716, the communication device CM starts a monitoring window, and monitors an OD-SIB1 request ACK in the monitoring window. In Step 718, the target cell TC transmits the OD-SIB1 request ACK to the communication device CM in the monitoring window. In Step 720, the communication device CM stops the monitoring window. In Step 722, the target cell TC transmits an OD-SIB1 to the communication device CM. In Step 724, the communication device CM determines whether the target cell TC is a cell that the communication device CM is able to camp on according to the OD-SIB1. In Step 726, the communication device CM transmits a re-establishment request message to the target cell TC in response to the target cell TC being the cell that the communication device CM is able to camp on. In Step 728, the target cell TC transmits a re-establishment message to the communication device CM in response to the re-establishment request message. In Step 730, the communication device CM camps on the target cell TC according to the re-establishment message.

In Steps 728 and 730, the re-establishment message may be replaced by the setup message.

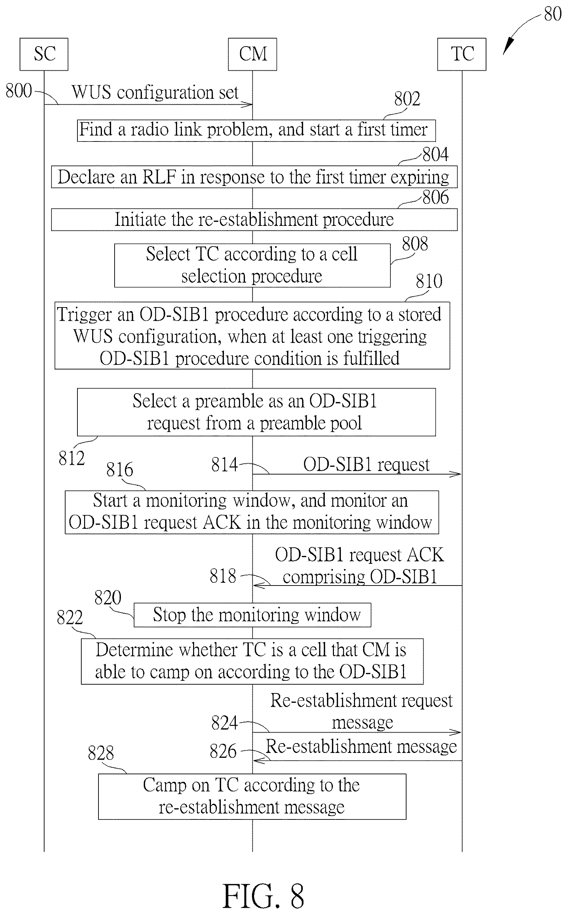

FIG. 8 is a sequence diagram of a process 80 according to an example of the present invention. There are a communication device CM, a serving cell SC of the communication device CM and a target cell TC of the communication device CM in FIG. 8. The communication device CM is in a connected mode. In Step 800, the serving cell SC transmits a WUS configuration set of the serving cell SC to the communication device CM. In Step 802, the communication device CM finds a radio link problem, and starts a first timer. In Step 804, the communication device CM declares an RLF in response to the first timer expiring. In Step 806, the communication device CM initiates the re-establishment procedure. In Step 808, the communication device CM selects the target cell TC according to a cell selection procedure. In Step 810, the communication device CM triggers an OD-SIB1 procedure according to a stored WUS configuration, when at least one triggering OD-SIB1 procedure condition is fulfilled. The stored WUS configuration is comprised in the WUS configuration set, and corresponds to the target cell TC. The at least one triggering OD-SIB1 procedure condition comprises at least one of: the target cell TC does not provide an SIB1; the target cell TC is a NES cell; stored WUS configuration is valid; and the target cell TC supports the OD-SIB1 procedure; and the target cell TC supports the OD-SIB1 procedure.

In Step 812, the communication device CM selects a preamble as an OD-SIB1 request from a preamble pool. In Step 814, the communication device CM transmits an OD-SIB1 request to the target cell TC. In Step 816, the communication device CM starts a monitoring window, and monitors an OD-SIB1 request ACK in the monitoring window. In Step 818, the target cell TC transmits the OD-SIB1 request ACK to the communication device CM in the monitoring window. The OD-SIB1 request ACK comprises an OD-SIB1. In Step 820, the communication device CM stops the monitoring window. In Step 822, the communication device CM determines whether the target cell TC is a cell that the communication device CM is able to camp on according to the OD-SIB1. In Step 824, the communication device CM transmits a re-establishment request message to the target cell TC in response to the target cell TC being the cell that the communication device CM is able to camp on. In Step 826, the target cell TC transmits a re-establishment message to the communication device CM in response to the re-establishment request message. In Step 828, the communication device CM camps on the target cell TC according to the re-establishment message.

In Steps 826 and 828, the re-establishment message may be replaced by the setup message.

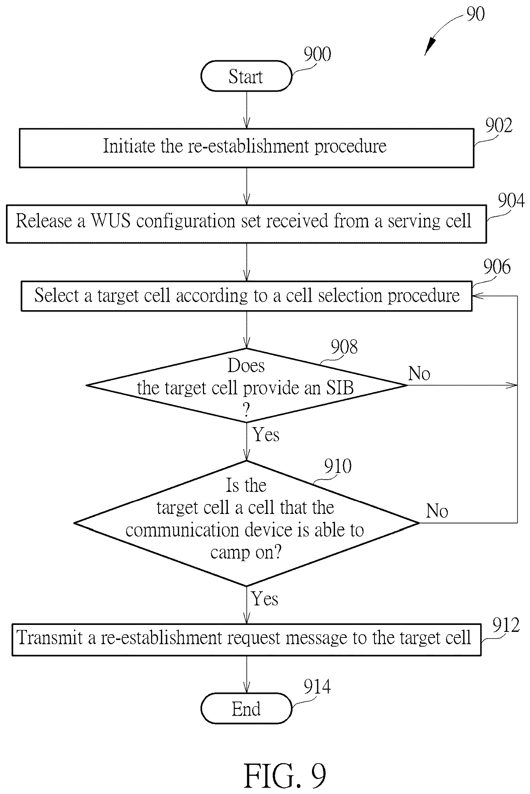

FIG. 9 is a flowchart of a process 90 according to an example of the present invention. The process 90 may be utilized in a communication device (e.g., a communication device 14 in FIG. 1, the communication device 20 in FIG. 2 or the communication device in the process 30), to handle a re-establishment procedure. The process 90 may be compiled into the program codes 214 and includes the following steps:

| | |
|---|---|
| Step 900: | Start. |
| Step 902: | Initiate the re-establishment procedure. |
| Step 904: | Release a WUS configuration set received from a serving cell. |
| Step 906: | Select a target cell according to a cell selection procedure. |
| Step 908: | Does the target cell provide an SIB? If yes, perform Step 910. If no, perform Step 906. |
| Step 910: | Is the target cell a cell that the communication device is able to camp on? If yes, perform Step 912. If no, perform Step 906. |
| Step 912: | Transmit a re-establishment request message to the target cell. |
| Step 914: | End. |

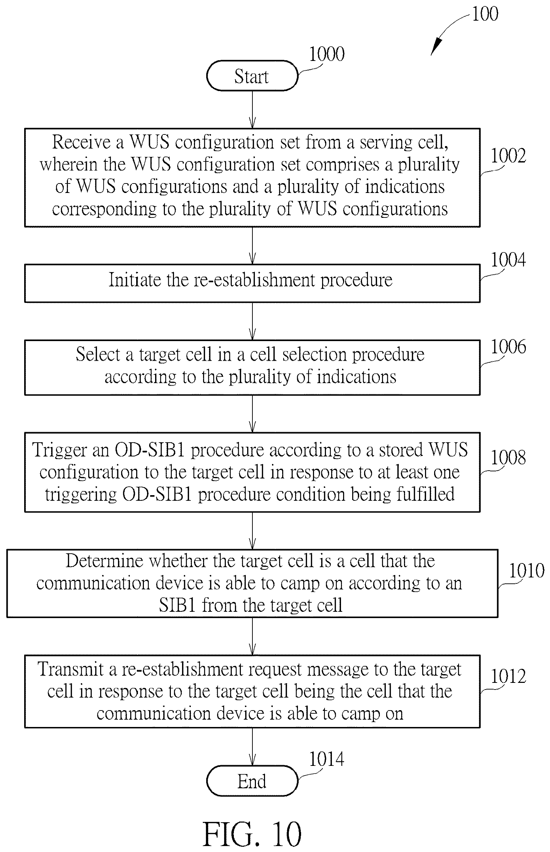

FIG. 10 is a flowchart of a process 100 according to an example of the present invention. The process 100 may be utilized in a communication device (e.g., a communication device 14 in FIG. 1, the communication device 20 in FIG. 2 or the communication device in the process 30), to handle a re-establishment procedure. The process 100 may be compiled into the program codes 214 and includes the following steps:

| | |
|---|---|
| Step 1000: | Start. |
| Step 1002: | Receive a WUS configuration set from a serving cell, wherein the WUS configuration set comprises a plurality of WUS configurations and a plurality of indications corresponding to the plurality of WUS configurations. |
| Step 1004: | Initiate the re-establishment procedure. |
| Step 1006: | Select a target cell in a cell selection procedure according to the plurality of indications. |
| Step 1008: | Trigger an OD-SIB1 procedure according to a stored WUS configuration to the target cell in response to at least one triggering OD-SIB1 procedure condition being fulfilled. |
| Step 1010: | Determine whether the target cell is a cell that the communication device is able to camp on according to an SIB1 from the target cell. |
| Step 1012: | Transmit a re-establishment request message to the target cell in response to |
| | the target cell being the cell that the communication device is able to camp on. |
| Step 1014: | End. |

In Step 1002, each of the plurality of indications indicates whether a corresponding WUS configuration is supported by the communication device in the connected mode. In Step 1004, the communication device does not select a cell which does not support the OD-SIB1 procedure. In Step 1006, the at least one triggering OD-SIB1 procedure condition comprises at least one of the following conditions: the target cell does not provide the SIB1; the target cell is a NES cell; and the target cell supports the OD-SIB1 procedure.

A detailed description and variations of the processes 90-100 can be referred to the examples of the process 30, and are not narrated herein.

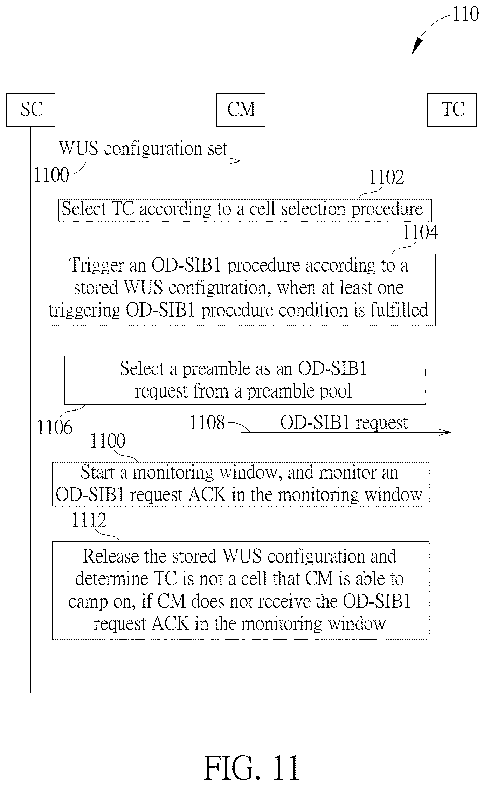

FIG. 11 is a sequence diagram of a process 110 according to an example of the present invention. There are a communication device CM, a serving cell SC of the communication device CM and a target cell TC of the communication device CM in FIG. 11. In Step 1100, the serving cell SC transmits a WUS configuration set of the serving cell SC to the communication device CM. In Step 1102, the communication device CM selects the target cell TC according to a cell selection procedure. In Step 1104, the communication device CM triggers an OD-SIB1 procedure according to a stored WUS configuration, when at least one triggering OD-SIB1 procedure condition is fulfilled. The stored WUS configuration is comprised in the WUS configuration set, and corresponds to the target cell TC. The at least one triggering OD-SIB1 procedure condition comprises at least one of: the target cell TC does not provide an SIB1; the target cell TC is a NES cell; and the target cell TC supports the OD-SIB1 procedure. In Step 1106, the communication device CM selects a preamble as an OD-SIB1 request from a preamble pool. In Step 1108, the communication device CM transmits an OD-SIB1 request to the target cell TC. In Step 1110, the communication device CM starts a monitoring window, and monitors an OD-SIB1 request ACK in the monitoring window. In Step 1112, the communication device CM releases the stored WUS configuration and determines the target cell TC is not a cell that the communication device CM is able to camp on, if the communication device CM does not receive the OD-SIB1 request ACK in the monitoring window.

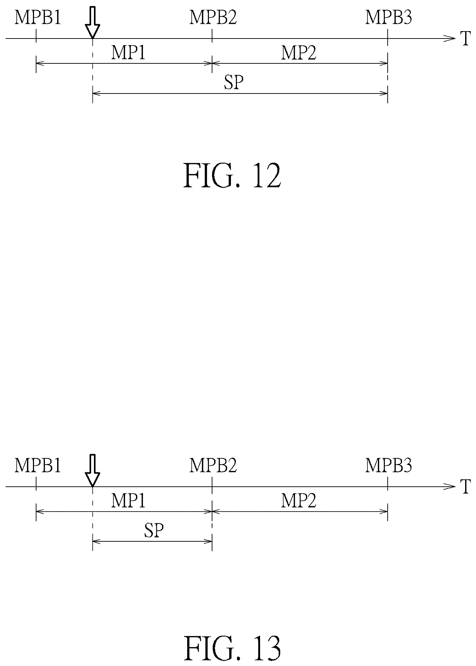

FIG. 12 is a schematic diagram of a specific period SP for verifying whether a stored WUS configuration is valid according to an example of the present invention. There is a time domain axis T in FIG. 12, and there are two modification periods MP1-MP2 and three boundaries MPB1-MPB3 of modification periods on the time domain axis T. The boundary MPB1 is a beginning of the modification period MP1. The boundary MPB2 is an end of the modification period MP1, and a beginning of the modification period MP2. The boundary MPB3 is an end of the modification period MP2. An arrow within the modification period MP1 represents a time instant for the communication device to receive an SI change indication from a serving cell. The time instant is a beginning of the specific period SP. Since the SI change indication is not set, the communication device ends the specific period SP at the boundary MPB3. Thus, the communication device determines the stored WUS configuration is valid in response to a SFN of a current radio frame being in the specific period SP. The communication device determines the stored WUS configuration is invalid at an end of the specific period.

FIG. 13 is a schematic diagram of a specific period SP for verifying whether a stored WUS configuration is valid according to an example of the present invention. There is a time domain axis T in FIG. 13, and there are two modification periods MP1-MP2 and three boundaries MPB1-MPB3 of modification periods on the time domain axis T. The boundary MPB1 is a beginning of the modification period MP1. The boundary MPB2 is an end of the modification period MP1, and a beginning of the modification period MP2. The boundary MPB3 is an end of the modification period MP2. An arrow within the modification period MP1 represents a time instant for the communication device to receive an SI change indication from a serving cell. The time instant is a beginning of the specific period SP. Since the SI change indication is set, the communication device ends the specific period SP at the boundary MPB2. Thus, the communication device determines the stored WUS configuration is valid in response to a SFN of a current radio frame being in the specific period SP. The communication device determines the stored WUS configuration is invalid at an end of the specific period.

The terms of "first", "second", "third" and "fourth" described above are used to distinguish the relevant statements, and do not limit the order of the relevant statements. The operation of "determine" described above may be replaced by the operation of "compute", "calculate", "obtain", "generate", "output, "use", "choose/select", "decide" or "is configured to". The phrase of "according to" described above may be replaced by "in response to". The term of "via" described above may be replaced by "on", "in" or "at". The term of "when", "if" or "since" described above may be replaced by "in response to". The term of "WUS configuration" described above may be replaced by the term of "random access (RA) procedure configuration".

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device.

Examples of the hardware may include analog circuit(s), digital circuit(s) and/or mixed circuit(s). For example, the hardware may include ASIC(s), field programmable gate array(s) (FPGA(s)), programmable logic device(s), coupled hardware components or combination thereof. In another example, the hardware may include general-purpose processor(s), microprocessor(s), controller(s), digital signal processor(s) (DSP(s)) or combination thereof.

Examples of the software may include set(s) of codes, set(s) of instructions and/or set(s) of functions retained (e.g., stored) in a storage unit, e.g., a computer-readable medium. The computer-readable medium may include SIM, ROM, flash memory, RAM, CD-ROM/DVD-ROM/BD-ROM, magnetic tape, hard disk, optical data storage device, non-volatile storage unit, or combination thereof. The computer-readable medium (e.g., storage unit) may be coupled to at least one processor internally (e.g., integrated) or externally (e.g., separated). The at least one processor which may include one or more modules may (e.g., be configured to) execute the software in the computer-readable medium. The set(s) of codes, the set(s) of instructions and/or the set(s) of functions may cause the at least one processor, the module(s), the hardware and/or the electronic system to perform the related steps.

Examples of the electronic system may include a system on chip (SoC), system in package (SiP), a computer on module (CoM), a computer program product, an apparatus, a mobile phone, a laptop, a tablet computer, an electronic book or a portable computer system, and the communication device 20.

To sum up, embodiments of the present invention provide methods and communication devices for handling a re-establishment procedure. The communication device verifies whether a stored WUS configuration corresponding to a target cell is valid. The communication device performs an OD-SIB1 procedure according to the stored WUS configuration, if the stored WUS configuration is valid. The communication device reselects another target cell, if the stored WUS configuration is invalid. Thus, the problem of handling the re-establishment procedure can be solved.

## Claims

1. A method of a communication device (14, 20) for handling a re-establishment procedure, **characterized by:**
initiating the re-establishment procedure (302);
selecting a target cell according to a cell selection procedure (304);
triggering an on-demand system information block 1, OD-SIB1, procedure according to a stored wake up signal, WUS, configuration to the target cell in response to at least one triggering OD-SIB1 procedure condition being fulfilled (306);
selecting an OD-SIB1 request from a preamble pool (308);
transmitting the OD-SIB1 request to the target cell at a uplink, UL, resource in the OD-SIB1 procedure (310);
determining whether the target cell is a cell that the communication device is able to camp on according to an SIB1 from the target cell (312); and
transmitting a re-establishment request message to the target cell in response to the target cell being the cell that the communication device is able to camp on (314).

2. The method of claim 1, **characterized in that** the at least one triggering OD-SIB1 procedure condition comprises at least one of the following conditions:
the target cell does not provide the SIB1;
the target cell is a network energy saving, NES, cell; and
the stored WUS configuration is valid.

3. The method of claim 1, further **characterized by:**
verifying whether the stored WUS configuration is valid.

4. The method of claim 3, **characterized in that** the step of verifying whether the stored WUS configuration is valid comprises at least one of:
determining the stored WUS configuration is valid in response to a system frame number, SFN, of a current radio frame being in a specific period;
determining the stored WUS configuration is invalid at an end of the specific period; and
determining the end of the specific period.

5. The method of claim 4, **characterized in that** the step of determining the end of the specific period comprises:
receiving, from a serving cell of the communication device, a system information, SI, change indication being set in a modification period; and
ending the specific period at a boundary of the modification period.

6. The method of claim 1, **characterized in that** the OD-SIB1 procedure comprises at least one of:
starting a monitoring window;
monitoring an OD-SIB1 request acknowledgement, ACK, in the monitoring window; and
stopping the monitoring window in response to receiving the OD-SIB1 request ACK from the target cell; and
monitoring the SIB1 in response to monitoring the OD-SIB1 request ACK;
wherein the OD-SIB1 request ACK comprises at least one of a timing advance, TA, value, a resource for the re-establishment request message, an identity of the communication device, and information for the SIB1.

7. The method of claim 6, **characterized in that** the step of monitoring the OD-SIB1 request ACK in the monitoring window comprises at least one of:
determining the stored WUS configuration in response to the monitoring window expiring;
retransmitting the OD-SIB1 request to the target cell in response to the monitoring window expiring;
increasing a value of a counter by 1 in response to retransmitting the OD-SIB1 request to the target cell; and
determining the target cell is a barring cell in response to the value of the counter being greater than a threshold.

8. A method of a serving cell (20) for handling a re-establishment procedure, **characterized by:**
transmitting a wake up signal, WUS, configuration set to a communication device (14, 20) (402);
wherein the WUS configuration set comprises a plurality of identities, IDs, for a plurality of cells, a plurality of frequencies corresponding to the plurality of cells and a plurality of WUS configuration corresponding to the plurality of cells;
wherein the plurality of cells comprises the serving cell.

9. The method of claim 8, **characterized in that** at least one of the following limitations is satisfied:
the WUS configuration set further comprises a plurality of indications corresponding to the plurality of WUS configurations; and
each of the plurality of indications indicates whether a corresponding WUS configuration is supported by the communication device in a connected mode.

10. The method of claim 8, further **characterized by:**
transmitting a cell list to the communication device;
wherein the cell list indicates which WUS configuration in the WUS configuration set is supported by the communication device in a connected mode.

11. The method of claim 8, **characterized in that** at least one of the following limitations is satisfied:
the WUS configuration set further comprises a plurality of thresholds corresponding to the plurality of WUS configurations; and
each of the plurality of thresholds indicates a maximum of retry numbers for the communication device in a connected mode to perform an on-demand system information block 1, OD-SIB1, procedure according to a corresponding WUS configuration.

12. A method of a network energy saving, NES, cell (20) for handling a re-establishment procedure, **characterized by:**
performing an on-demand system information block 1, OD-SIB1, procedure with a communication device (14, 20) according to a stored wake up signal, WUS, configuration in response to at least one triggering OD-SIB1 procedure condition being fulfilled (502); and
receiving a re-establishment request message from the communication device in response to the NES cell being a cell that the communication device is able to camp on (504);
wherein the step of performing the OD-SIB1 procedure comprises:
receiving an OD-SIB1 request from the communication device at a uplink, UL, resource.

13. The method of claim 12, **characterized in that** the at least one triggering OD-SIB1 procedure condition comprises at least one of the following conditions:
the NES cell does not provide an SIB1; and
the stored WUS configuration is valid.

14. The method of claim 12, **characterized in that** at least one of the following limitations is satisfied:
the stored WUS configuration is valid in response to a system frame number, SFN, of a current radio frame being in a specific period;
the stored WUS configuration is invalid at an end of the specific period; and
the end of the specific period is at a boundary of a modification period in which the communication device receives a system information, SI, change indication being set from a serving cell of the communication device.

15. The method of claim 12, **characterized in that** the OD-SIB1 procedure comprises at least one of:
transmitting an OD-SIB1 request acknowledgement, ACK, to the communication device in response to the OD-SIB1 request;
wherein the OD-SIB1 request ACK comprises at least one of a timing advance, TA, value, a resource for the re-establishment request message, an identity of the communication device, and information for an SIB1.
